# FASCICULE DE BREVET EUROPEEN

(11) **EP 1 292 543 B1**
(45) Date de publication et mention de la délivrance du brevet: **15.03.2006**
(21) Numéro de dépôt: 01947568.0
(22) Date de dépôt: 21.06.2001
(51) Int. Cl.: C02F 1/68, C02F 9/00

(54) **PROCEDE DE FABRICATION D'UNE EAU RICHE EN CALCIUM**
VERFAHREN ZUR HERSTELLUNG VON KALZIUMREICHEM WASSER
METHOD FOR PRODUCING WATER RICH IN CALCIUM

(30) Priorité: 21.06.2000 FR 0007920
(43) Date de publication de la demande: 19.03.2003
(73) Titulaire: COMPAGNIE GERVAIS-DANONE, F-92302 Levallois Perret (FR)
(72) Inventeur: JAUFFRET, Henri, F-92160 Antony (FR); LASCOSTE, Christophe, F-63112 Blanzat (FR)
(74) Mandataire: Goulard, Sophie
(86) Numéro de dépôt international: PCT/FR2001/001955
(87) Numéro de publication internationale: WO 2001/098216

(56) Documents cités:
- EP-A- 0 187 432
- EP-A- 0 576 752

## Description

La présente invention se rapporte à un procédé de fabrication d'une eau riche en calcium et à l'eau obtenue par ce procédé.

Le calcium est l'élément minéral le plus abondant dans le corps humain, réparti à 99% dans les os. Cet élément joue un rôle dans la construction osseuse, la contraction musculaire, la transmission des signaux nerveux et les échanges ioniques à travers les membranes cellulaires. Il intervient également dans la sécrétion des hormones, des enzymes digestives et des neurotransmetteurs.

Les apports journaliers recommandés (AJR) en calcium sont de 800 mg pour les hommes et les femmes de plus de 24 ans, un apport en calcium plus important étant requis lors de la grossesse et de l'allaitement par exemple.

Le lait, les produits laitiers et certains légumes (notamment les brocolis, le chou frisé et le persil) sont des aliments naturellement riches en calcium. L'eau peut également constituer une source importante de calcium. En effet, contrairement aux eaux de source qui sont habituellement pauvres en calcium, certaines eaux minérales sont naturellement riches en ce minéral.

Toutefois, dans ces eaux plates, le calcium est principalement présent sous forme de sulfate (CaSO₄), forme qui est mal assimilée au niveau de l'intestin et qui confère à l'eau un goût communément qualifié de désagréable par le consommateur.

Du chlorure de calcium (CaCl₂) est parfois ajouté pour enrichir les eaux de bouteilles en calcium. Bien que ce sel soit très soluble dans l'eau, il ne permet pas d'obtenir une concentration en calcium très élevée, puisque la quantité de chlorure de calcium dans les eaux de boisson est limitée à 250 mg/l par les directives européennes. En outre, à l'instar du sulfate de calcium, le chlorure de calcium confère un mauvais goût à l'eau.

Le but de la présente invention est donc de pourvoir à une eau de boisson particulièrement riche en calcium qui ne présente pas les inconvénients des eaux riches en calcium antérieurement connues, ainsi qu'à un procédé de fabrication d'une telle eau.

L'invention a pour objet un procédé de fabrication d'une eau de boisson, caractérisé en ce qu'il comprend les étapes suivantes :
a) dissolution de gaz carbonique dans une eau potable faiblement minéralisée,
b) passage de l'eau carbonatée obtenue à l'étape a) dans une enceinte à l'intérieur de laquelle est confiné du carbonate de calcium sous forme solide, et
c) addition, à l'eau obtenue à l'étape b), d'une solution comprenant du sulfate de calcium et/ou du chlorure de calcium.

On entend par « eau de boisson » une eau potable apte à la consommation humaine quotidienne, eau qui ne se trouve pas telle qu'elle dans la nature mais dont la composition en éléments minéraux est ajustée par un procédé industriel.

Par ailleurs, on entend par « eau carbonatée » une eau comprenant du gaz carbonique et par « eau potable faiblement minéralisée » une eau potable qui ne contient pas d'ions calcium ou qui en contient moins de 50 mg/l. Il est bien entendu que l'on pourrait également utiliser une eau qui comprend moins de 150 mg/l d'ions calcium, ou, de façon générale, toute eau qui ne contient pas le taux désiré en ions calcium.

Dans un mode de mise en oeuvre avantageux du procédé conforme à l'invention, le gaz carbonique est dissous dans l'eau faiblement minéralisée, lors de l'étape a) du procédé, à un débit compris entre 4 et 10 kg/h, de manière à ce que l'eau comprenne, à l'issue de l'étape a), entre 200 et 500 mg/l de gaz carbonique, de préférence environ 350 mg/l. Le débit de dissolution du gaz carbonique mentionné ci-dessus, (de même, tous les débits qui seront indiqués dans ce qui suit) est exprimé pour un débit d'eau, au cours du procédé de fabrication d'une eau de boisson selon l'invention, de 20 m³/h. Un telle valeur est choisie de façon arbitraire, étant bien entendu qu'un débit d'eau différent pourrait être utilisé, par exemple dans une gamme de 80 à 200 m³/h, auquel cas les autres débits mentionnés dans ce qui suit seront ajustés en conséquence.

L'enceinte dans laquelle passe l'eau lors de l'étape b) du procédé conforme à l'invention renferme classiquement entre 150 et 500 kg de carbonate de calcium sous forme solide par m³/h d'eau traitée.

L'eau obtenue à l'issue de l'étape b) comprend ainsi avantageusement entre 80 et 170 mg/l, de préférence 130 mg/l d'ions calcium sous forme de bicarbonate.

La solution utilisée lors de l'étape c) comprend par exemple entre 80 et 400 g/l, de préférence 90 g/l de sulfate de calcium et/ou entre 100 et 300 g/l, de préférence 240 g/l de chlorure de calcium.

Pour 20 m³/h d'eau traitée au cours du procédé selon l'invention, ladite solution de sulfate de calcium et/ou de chlorure de calcium est avantageusement ajoutée à l'eau obtenue à l'étape b) à un débit compris entre 15 et 60 l/h, par exemple de 30 l/h.

A l'issue de l'étape c), l'eau comprend avantageusement entre 20 et 100 mg/l, de préférence 40 mg/l d'ions calcium sous forme de sulfate, et/ou entre 20 et 140 mg/l, de préférence 130 mg/l d'ions calcium sous forme de chlorure.

Le procédé conforme à la présente invention présente l'avantage de permettre d'obtenir une eau riche en calcium, qui comprend notamment un taux élevé d'ions calcium sous forme de bicarbonate (Ca(HCO₃)₂). Cette forme, ionisée, présente l'avantage, par rapport aux formes sulfate et chlorure, de rendre le calcium plus disponible au niveau de l'intestin et de ne pas conférer un goût désagréable à l'eau.

En outre, la présence simultanée d'ions calcium sous forme de bicarbonate, de chlorure et/ou de sulfate, ainsi que la répartition entre ces différentes formes ioniques, permet d'optimiser le goût de l'eau.

Le procédé décrit ci-dessus permet d'obtenir une eau plate. Si l'on souhaite obtenir une eau gazeuse, le procédé conforme à l'invention peut comprendre, après l'étape c), une étape de dissolution dans l'eau de gaz carbonique, par exemple à un débit compris entre 60 et 120 kg/h (exprimé pour un débit d'eau traitée de 20 m³/h), de façon à ce que l'eau obtenue après la dissolution du gaz carbonique comprenne entre 3 et 6 g/l de ce gaz, de préférence environ 4,5 g/l.

L'eau obtenue selon le procédé tel que défini ci-dessus comprend avantageusement au moins 300 mg/l d'ions calcium. d'ions calcium.

Une telle eau comprend entre 80 et 170 mg/l, de préférence 130 mg/l, d'ions calcium sous forme de bicarbonate, dont les avantages sur le goût de l'eau et sur l'assimilation du calcium ont été évoqués ci-avant.

L'eau obtenue peut également comprendre entre 20 et 100 mg/l, de préférence 40 mg/l, d'ions calcium sous forme de sulfate, et/ou entre 20 et 140 mg/l, de préférence 130 mg/l, d'ions calcium sous forme de chlorure.

La consommation régulière de l'eau obtenue permet de couvrir une partie significative des AJR en calcium, et de réduire ainsi les risques d'une déficience en calcium, dont on connaît les conséquences néfastes sur la santé, telles que les risques d'ostéoporose et, pour les personnes âgées, de fractures osseuses.

L'eau obtenue peut également comprendre, en outre, jusqu'à 80 mg/l, de préférence 50 mg/l, d'ions magnésium (ce qui correspond à environ 15% des AIR, qui sont de 350 mg) et/ou des agents modifiants du goût, tels que des arômes de fruits ou de menthe.

De préférence, l'eau obtenue selon l'invention est une eau plate. En variante, il peut s'agir d'une eau gazeuse.

L'invention sera mieux comprise à l'aide de la description qui va suivre, qui se réfère à un exemple de fabrication d'une eau riche en calcium, ainsi qu'au dessin annexé, qui représente schématiquement une installation pour la mise en oeuvre du procédé de fabrication selon l'invention.

Il est bien entendu, toutefois, que cet exemple est donné uniquement à titre d'illustration de l'objet de l'invention, dont il ne constitue en aucune manière une limitation.

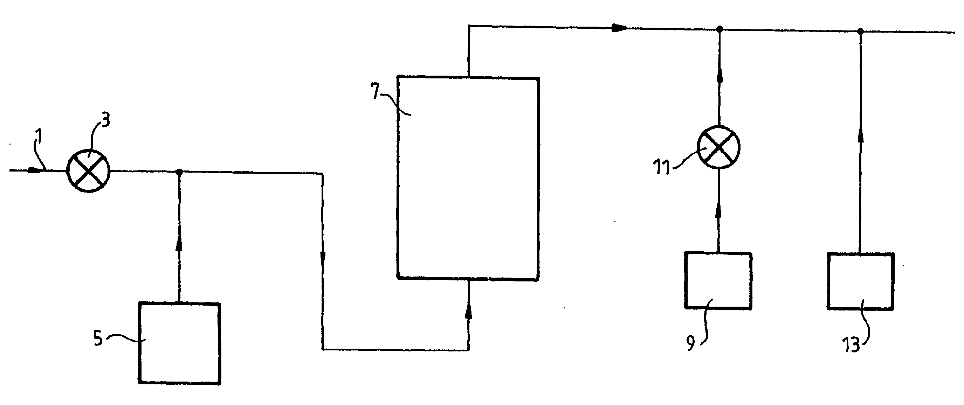

La figure 1 représente une installation pour mettre en oeuvre le procédé de fabrication d'une eau riche en calcium conforme à l'invention.

De l'eau brute, telle qu'une eau potable d'adduction comprenant moins de 50 mg/l d'ions calcium, ou moins de 150 mg/l, comme évoqué précédemment, est introduite dans la canalisation 1 au moyen d'une pompe 3, à un débit compris entre 10 et 100 m³/h, par exemple égal à 20 m³/h.

Du gaz carbonique, stocké dans l'enceinte 5, est dissous dans l'eau à un débit compris entre 4 et 10 kg/h, de préférence égale à 7 kg/h, de façon à obtenir une eau dont la concentration en gaz carbonique est comprise entre 200 et 500 mg/l, de préférence d'environ 350 mg/l.

L'eau chargée en gaz carbonique (« eau carbonatée ») ainsi obtenue est ensuite introduite dans une enceinte 7, par exemple de 2,5 m de hauteur et d'un diamètre cylindrique de 1,8 m, à l'intérieur de laquelle est confiné du carbonate de calcium sous forme solide. Le débit de passage de l'eau carbonatée dans l'enceinte 7 est compris entre 10 et 30 m³/h, par exemple égal à 20 m³/h.

La réaction entre l'eau, acidifiée par la présence de gaz carbonique, et le carbonate de calcium solide aboutit à la formation de bicarbonate de calcium, sel solubilisé dans l'eau. Lors de son passage dans l'enceinte 7, l'eau se charge donc en bicarbonate et en calcium (à raison de 120 à 150 mg/l de calcium) et s'appauvrit simultanément en gaz carbonique, dont la concentration à la sortie de l'enceinte 7 est comprise entre 150 et 250 mg/l, dans le cas présent environ 220 mg/l.

Pour un débit de 20 m³/h d'eau traitée, une solution comprenant entre 80 et 400 g/l, par exemple 90 g/l, de sulfate de calcium et/ou entre 100 et 300 g/l, par exemple 240 g/l, de chlorure de calcium, stockée dans le récipient 9, est ajoutée à l'eau enrichie en carbonate de calcium, après sa sortie de l'enceinte 7, par l'intermédiaire d'un pompe 11, à un débit d'introduction compris entre 20 et 40 l/h, par exemple égal à 30 l/h.

On obtient ainsi une eau plate qui comprend, outre des ions calcium sous forme de bicarbonate, entre 20 et 100 mg/l, de préférence 40 mg/l d'ions calcium sous forme de sulfate et/ou entre 20 et 140 mg/l, de préférence 130 mg/l d'ions calcium sous forme de chlorure.

Si l'on souhaite obtenir une eau gazeuse, du gaz carbonique, stocké dans le récipient 13, est ensuite injecté dans l'eau, à un débit compris entre 60 et 120 kg/h, de préférence égal à 90 kg/h (exprimé par rapport à un débit d'eau traitée de 20 m³/h). On obtient ainsi une eau qui comprend entre 3 et 6 g/l de gaz carbonique, de préférence environ 4,5 g/l.

En variante, l'obtention d'une eau gazeuse pourrait être réalisée en injectant du gaz carbonique dans l'eau en quantité suffisante en tout début de procédé. Conformément à cette variante, de 1 à 2 g/l de gaz carbonique, issus de l'enceinte 5, sont injectés dans l'eau brute introduite dans la canalisation 1. Cette variante présente l'avantage de diminuer le dimensionnement de l'enceinte 7, qui comprend le carbonate de calcium sous forme solide : lors de l'étape b) du procédé selon l'invention, il sera possible d'utiliser 4 à 5 fois moins de carbonate de calcium par rapport à ce qui a été mentionné précédemment.

L'eau obtenue, plate ou gazeuse, est enfin dirigée vers une cuve de stockage avant d'être mise en bouteille.

Il est bien entendu que, outre les moyens représentés schématiquement sur la figure 1, le dispositif apte à la mise en oeuvre du procédé conforme à l'invention comprend d'autres moyens qui apparaîtront immédiatement nécessaires à un Homme du métier, tels que des bacs tampon, des vannes à l'entrée et à la sortie de chacun des récipients, des moyens de commande et de régulation de ces vannes, etc.

## Revendications

1. Procédé de fabrication d'une eau de boisson, **caractérisé en ce qu'**il comprend les étapes suivantes :
a) dissolution de gaz carbonique dans une eau potable faiblement minéralisée,
b) passage de l'eau carbonatée obtenue à l'étape a) dans une enceinte (7) à l'intérieur de laquelle est confiné du carbonate de calcium sous forme solide, et
c) addition, à l'eau obtenue à l'étape b), d'une solution comprenant du sulfate de calcium et/ou du chlorure de calcium.

2. Procédé selon la revendication 1, **caractérisé en ce que** ladite eau faiblement minéralisée comprend moins de 50 mg/l d'ions calcium.

3. Procédé selon la revendications 1 ou la revendication 2, **caractérisé en ce que** l'eau comprend, à l'issue de l'étape a), entre 200 et 500 mg/l de gaz carbonique, de préférence environ 350 mg/l.

4. Procédé selon l'une quelconque des revendications précédentes, **caractérisé en ce que** l'enceinte (7) renferme entre 150 et 500 kg de carbonate de calcium sous forme solide par m³/h d'eau traitée.

5. Procédé selon l'une quelconque des revendications précédentes, **caractérisé en ce que** l'eau obtenue à l'issue de l'étape b) comprend entre 80 et 170 mg/l, de préférence 130 mg/l d'ions calcium sous forme de bicarbonate.

6. Procédé selon l'une quelconque des revendications précédentes, **caractérisé en ce que** ladite solution utilisée lors de l'étape c) comprend entre 80 et 400 g/l, de préférence 90 g/l de sulfate de calcium et/ou entre 100 et 300 g/l, de préférence 240 g/l de chlorure de calcium.

7. Procédé selon la revendication 6, **caractérisé en ce que** ladite solution de sulfate de calcium et/ou de chlorure de calcium est ajoutée à l'eau obtenue à l'étape b) à un débit compris entre 15 et 60 l/h.

8. Procédé selon l'une quelconque des revendications précédentes, **caractérisé en ce que** l'eau obtenue à l'issue- de l'étape c) comprend entre 20 et 100 mg/l, de préférence 40 mg/l d'ions calcium sous forme de sulfate, et/ou entre 20 et 140 mg/l, de préférence 130 mg/l d'ions calcium sous forme de chlorure.

9. Procédé selon l'une quelconque des revendications précédentes, **caractérisé en ce que** l'eau obtenue à l'issue de l'étape c) comprend au moins 300 mg/l d'ions calcium.

10. Procédé selon l'une quelconque des revendications précédentes, **caractérisé en ce qu'**il comprend, après l'étape c), une étape de dissolution dans l'eau de gaz carbonique.

11. Procédé selon la revendication 10, **caractérisé en ce que** le gaz carbonique est dissous dans l'eau à un débit compris entre 60 et 120 kg/h.

12. Procédé selon la revendication 10 ou la revendication 11, **caractérisé en ce que** l'eau obtenue après dissolution du gaz carbonique comprend entre 3 et 6 g/l de gaz carbonique, de préférence environ 4,5 g/l.

## Claims

1. Process of manufacturing a drinking water, **characterised in that** it comprises the following steps :
a) dissolving carbon dioxide in a slightly mineralised potable water,
b) passing the carbonated water obtained in Step a) into a container (7) in which is confined calcium carbonate in solid form, and
c) adding to the water obtained in Step b) a solution comprising calcium sulphate and/or calcium chloride.

2. Process according to claim 1, **characterised in that** said slightly mineralised water comprises less than 50 mg/l of calcium ions.

3. Process according to claim 1 or 2, **characterised in that** at the end of Step a) the water comprises between 200 and 500 mg/l of carbon dioxide, preferably about 350 mg/l.

4. Process according to any one of the preceding claims, **characterised in that** the container (7) contains between 150 and 500 kg of calcium carbonate in solid form per m³/h of treated water.

5. Process according to any one of the preceding claims, **characterised in that** the water obtained at the end of Step b) comprises between 80 and 170 mg/l, preferably 130 mg/l of calcium ions in bicarbonate form.

6. Process according to any one of the preceding claims, **characterised in that** said solution used in Step c) comprises between 80 and 400 g/l, preferably 90 g/l of calcium sulphate and/or between 100 and 300 g/l, preferably 240 g/l, of calcium chloride.

7. Process according to claim 6, **characterised in that** said solution of calcium sulphate and/or calcium chloride is added to the water obtained in Step b) at a flow rate of between 15 and 60 l/h.

8. Process according to any one of the preceding claims, **characterised in that** the water obtained at the end of Step c) comprises between 20 and 100 mg/l, preferably 40 mg/l of calcium ions in the form of sulphate, and/or between 20 and 140 mg/l, preferably 130 mg/l of calcium ions in the form of chloride.

9. Process according to any one of the preceding claims, **characterised in that** the water obtained at the end of Step c) comprises at least 300 mg/l of calcium ions.

10. Process according to any one of the preceding claims, **characterised in that** it comprises, after Step c), a step of dissolving carbon dioxide in the water.

11. Process according to claim 10, **characterised in that** the carbon dioxide is dissolved in the water at a flow rate of between 60 and 120 kg/h.

12. Process according to claim 10 or 11, **characterised in that** the water obtained after dissolution of the carbon dioxide comprises between 3 and 6 g/l of carbon dioxide, preferably about 4.5 g/l.

## Patentansprüche

1. Verfahren zur Herstellung eines Tafelwassers, **dadurch gekennzeichnet, dass** es die folgenden Schritte umfasst:
a) Lösen von Kohlensäuregas in einem schwach mineralisierten, trinkbaren Wasser,
b) Leiten des im Schritt a) erhaltenen, kohlensäurehaltigen Wassers in eine Kammer (7), in deren Innerem sich Calciumcarbonat in fester Form befindet, und
c) Zugabe einer Lösung, die Calciumsulfat und/oder Calciumchlorid umfasst, zu dem im Schritt b) erhaltenen Wasser.

2. Verfahren nach Anspruch 1, **dadurch gekennzeichnet, dass** das schwach mineralisierte Wasser weniger als 50 mg/l Calciumionen umfasst.

3. Verfahren nach Anspruch 1 oder Anspruch 2, **dadurch gekennzeichnet, dass** das Wasser am Ende von Schritt a) zwischen 200 und 500 mg/l Kohlensäuregas, vorzugsweise etwa 350 mg/l, umfasst.

4. Verfahren nach einem der vorhergehenden Ansprüche, **dadurch gekennzeichnet, dass** die Kammer (7) zwischen 150 und 500 kg Calciumcarbonat in fester Form pro m³/Std. des behandelten Wassers enthält.

5. Verfahren nach einem der vorhergehenden Ansprüche, **dadurch gekennzeichnet, dass** das am Ende von Schritt b) erhaltene Wasser zwischen 80 und 170 mg/l, vorzugsweise 130 mg/l, Calciumionen in Form von Bicarbonat umfasst.

6. Verfahren nach einem der vorhergehenden Ansprüche, **dadurch gekennzeichnet, dass** die im Schritt c) verwendete Lösung zwischen 80 und 400 g/l, vorzugsweise 90 g/l, Calciumsulfat und/oder zwischen 100 und 300 g/l, vorzugsweise 240 gl1, Calciumchlorid umfasst.

7. Verfahren nach Anspruch 6, **dadurch gekennzeichnet, dass** die Calciumsulfat- und/oder Calciumchloridlösung zu dem im Schritt b) erhaltenen Wasser mit einem Durchsatz zwischen 15 und 60 l/Std. zugesetzt wird.

8. Verfahren nach einem der vorhergehenden Ansprüche, **dadurch gekennzeichnet, dass** das am Ende von Schritt c) erhaltene Wasser zwischen 20 und 100 mg/l, vorzugsweise 40 mg/l, Calciumionen in Form von Sulfat und/oder zwischen 20 und 140 mg/l, vorzugsweise 130 mg/l, Calciumionen in Form von Chlorid umfasst.

9. Verfahren nach einem der vorhergehenden Ansprüche, **dadurch gekennzeichnet, dass** das am Ende von Schritt c) erhaltene Wasser mindestens 300 mg/l Calciumionen umfasst.

10. Verfahren nach einem der vorhergehenden Ansprüche, **dadurch gekennzeichnet, dass** es nach dem Schritt c) einen Schritt des Lösens von Kohlensäuregas in dem Wasser umfasst.

11. Verfahren nach Anspruch 10, **dadurch gekennzeichnet, dass** das Kohlensäuregas in dem Wasser mit einem Durchsatz zwischen 60 und 120 kg/Std. gelöst wird.

12. Verfahren nach Anspruch 10 oder Anspruch 11, **dadurch gekennzeichnet, dass** das Wasser, das nach dem Lösen von Kohlensäuregas erhalten wird, zwischen 3 und 6 g/l Kohlensäuregas, vorzugsweise etwa 4,5 g/l, umfasst.
